# EUROPÄISCHE PATENTSCHRIFT

(11) **EP 1 523 667 B1**
(45) Veröffentlichungstag und Bekanntmachung des Hinweises auf die Patenterteilung: **15.03.2006**
(21) Anmeldenummer: 02802969.2
(22) Anmeldetag: 08.11.2002
(51) Int. Cl.: G01N 21/64

(54) **DUNKELFELD-ABBILDUNGSVORRICHTUNG ZUR ORTSAUFGELÖSTEN DUNKELFELDABBILDUNG EINER PROBE UND UNTERSUCHUNGSVERFAHREN**
DARK FIELD IMAGING DEVICE FOR THE SPATIALLY-RESOLVED DARK FIELD IMAGING OF A SAMPLE AND EXAMINATION METHOD
SYSTEME D'IMAGERIE EN FOND NOIR DESTINE A L'IMAGERIE EN FOND NOIR A RESOLUTION SPATIALE D'UN ECHANTILLON ET METHODE D'EXAMEN

(30) Priorität: 12.11.2001 DE 10155142
(43) Veröffentlichungstag der Anmeldung: 20.04.2005
(73) Patentinhaber: Lossau, Harald, Dr., 80469 München (DE)
(72) Erfinder: LOSSAU, Harald, 81667 München (DE); MUSEWALD, Christian, 81545 München (DE)
(74) Vertreter: Kritzenberger & Zeuner
(86) Internationale Anmeldenummer: PCT/DE2002/004145
(87) Internationale Veröffentlichungsnummer: WO 2003/042671

(56) Entgegenhaltungen:
- EP-A- 1 024 355
- WO-A-01/69210
- WO-A-85/04014
- WO-A-99/22262
- WO-A-99/63327
- US-A- 5 861 910
- US-B1- 6 286 969

## Beschreibung

### Technisches Gebiet

Die Erfindung betrifft das Gebiet der Fluoreszenzabbildungen, bei denen die Fluoreszenzstrahlung einer Probe nach Absorption einer Anregungsstrahlung zur Untersuchung der Eigenschaften der Probe verwendet wird, und betrifft insbesondere eine Dunkelfeld-Abbildungsvorrichtung zur ortsaufgelösten Dunkelfeldabbildung einer Probe.

### Stand der Technik

Bei einer Fluoreszenzabbildung sorgt eine Lichtquelle großer spektraler Lichtdichteverteilung, wie etwa eine Xenon- oder Quecksilberdampflampe dafür, dass viele verschiedene fluoreszierende Stoffe verwendet werden können. Durch einen Erregerfilter wird die Probe nur mit dem Teil des Spektrums beleuchtet, für das auch der Fluoreszenzfarbstoff empfindlich ist. Gleichzeitig wird ein dunklerer Hintergrund erreicht und organische Proben geschützt, die z.B. durch UV-Licht zerstört oder verändert werden. Ein weiterer Sperrfilter im Strahlengang des Fluoreszenzlichts sorgt für erhöhten Kontrast.

Der Vorteil der Fluoreszenzmikrokopie, bei der die Wellenlängen von Anregungslicht und detektiertem Licht verschieden sind, gegenüber der Transmissions- oder Reflexionsmikroskopie, die mit gleichen Wellenlängen arbeiten, liegt unter anderem in den charakteristischen Eigenschaften des Fluoreszenzlichts, da neben der Strahlungsintensität auch aus der Fluoreszenzlebensdauer, der spektralen Verteilung und der Polarisation wichtige Informationen über die Probe gewonnen werden können.

Bei einem herkömmlichen Auflicht-Fluoreszenzmikroskop wird die Probe mit Licht bestrahlt, und fluoreszierende Farbstoffe, mit denen die Probe angefärbt wurde, emittieren das Fluoreszenzlicht, das der Experimentator im Okular beobachten kann. Mit Hilfe eines Filters wird das ebenfalls noch in den Detektionsstrahlengang gelangende Anregungslicht unterdrückt, so dass die Fluoreszenz nicht überstrahlt wird.

Das Auflicht-Fluoreszenzmikroskop enthält weiter einen dichroitischen Teilerspiegel, der die Aufgabe hat, die anregende Strahlung möglichst vollständig auf die Probe zu reflektieren und das Fluoreszenzlicht möglichst vollständig zum Okular durchzulassen. Sein Dichroismus ist also so beschaffen, dass der Spiegel für die Fluoreszenzwellenlänge transparent und für die Anregungswellenlänge ein Spiegel ist. Je nach Strahlengang kann auch eine umkehrte Verteilung von Transparenz und Verspiegelung verwirklicht sein, der Teilerspiegel stellt dann für die Fluoreszenzwellenlänge einen Spiegel dar, und ist für die Anregungswellenlänge transparent. In beiden Fällen bilden der Erregerfilter, der dichroitische Teilerspiegel und der Sperrfilter jeweils eine Baueinheit, die einfach durch Schwenken ausgewechselt wird.

Die internationale Patentanmeldung WO 01/69210 A1 beschreibt eine vorrichtung zur Untersuchung eines Arrays von Teststellen, welche ein Array getrennt ansteuerbaren Beleuchtungsquellen sowie einen ränmlich enflösenden optischen Detektor enthält.

Bei Durchlicht-Fluoreszenzmikroskopen sind die Anforderungen an die Filter sehr hoch, und es gelingt dort kaum, einen dunklen Hintergrund zu erreichen.

Dunkelfeldmikroskope lassen kein direktes Mikroskopierlicht in das Objektiv gelangen. Die Probe wird hierzu nicht mit einem Licht-Kegel, sondern nur mit einem Kegelmantel beleuchtet. Dieser Kegelmantel wird durch einen speziellen Kondensor, den so genannten Dunkelfeldkondensor, erzeugt. Befindet sich keine Probe im Strahlengang, bleibt das Gesichtsfeld beim Blick in das Okular vollständig dunkel. Wird dagegen ein Präparat in den Strahlengang gebracht, so kommt es durch Lichtbrechung, Reflexion, Beugung oder Streuung zu einer teilweisen Ablenkung des Mikroskopierlichts an den Probenstrukturen. Das so abgelenkte Licht gelangt nun teilweise in das Objektiv und erzeugt im Mikroskop ein sichtbares Bild. Die Objekte erscheinen daher im Allgemeinen hell leuchtend auf einem dunklen Untergrund. Dabei leuchten insbesondere die Ränder und streuende Grenzflächen auf, das Innere eines Objekts bleibt meist dunkel. Die internationale Patentanmeldung WO 99/22262 zeigt eine Dunkelfeldabbildungsvorrichtung im Durchlichtmikroskop, bei welcher der Dunkelfeldeffelet durch die Anordung zweier komplemantären ränmlicher Lichtmodulatoren vor und hinter der Probe erzielt wird.

Bei Laser-Raster-Mikroskopen wird die Probe in einem Rasterverfahren mit Hilfe eines die Probe abtastenden Laserstrahls untersucht. Die gemessenen Daten der Rasterpunkte werden anschließend zu einer Abbildung der Probe zusammengesetzt.

Der Vorteil der konfokalen Lichtmikroskopie besteht in der Möglichkeit, das von der Probe reflektierte oder emittierte Licht aus einer einzigen Tiefenebene zu sammeln. Eine Lochblende, die zur Fokusebene konjugiert, also konfokal angeordnet ist, sorgt dafür, dass nahezu sämtliches Licht, das nicht aus der Fokusebene stammt, nicht vom Detektor erfasst wird.

Bei einem konfokalen Laser-Scanning-Mikroskop wird, wie beim Laser-Raster-Mikroskop, aus einer sequentiellen Abtastung ein Bild der Probe Punkt für Punkt und Zeile für Zeile zusammengesetzt. Durch Verschieben der Fokusebene lassen sich die zweidimensionalen Bilder einer bestimmten Tiefe, die optische Schnitte, zu einem dreidimensionalen Bild zusammensetzen und insbesondere digital weiterverarbeiten.

Jede der genannten Methoden weist jedoch Nachteile auf. So limitiert bei der Fluoreszenzabbildung die erforderliche Unterdrückung des Anregungslichts durch Filter das erreichbare Signal-Rausch-Verhältnis.

Bei Anregung durch einen Laser-Scanner profitiert man zwar von der geringen spektralen Breite des Anregungslichts, man ist jedoch wegen der kollinearen Strahlengänge ebenfalls auf gute Filter angewiesen. Dazu sind die verwendete Laser kostspielig und die Scanvorrichtung aufgrund der beweglichen Teile wartungs- und reparaturintensiv.

Bei Verwendung eines CCD-Elements als Detektor wird meist eine Dunkelfeldanregung bevorzugt. Dann wird das Signal-Rausch-Verhältnis durch das Eigenrauschen des CCD-Chips bestimmt, so dass zur Erzielung hoher Empfindlichkeiten lange Integrationszeiten und eine Kühlung des Elements durch einen Peltierkühler oder mittels flüssigem Strickstoff erforderlich sind. Auch diese Lösung ist wegen der Verwendung von technisch aufwendigen CCD-Elementen kostspielig, wobei deren hohe Auflösung für viele Anwendung nicht benötigt und nicht genutzt wird.

### Darstellung der Erfindung

Hier setzt die Erfindung an. Der Erfindung, wie sie in den Ansprüchen gekennzeichnet ist, liegt die Aufgabe zugrunde, eine Abbildungsvorrichtung zur ortsaufgelösten Abbildung einer Probe, insbesondere einer fluoreszierenden Probe, zu schaffen, die die Nachteile des Stands der Technik vermeidet. Insbesondere soll eine Abbildungsvorrichtung geschaffen werden, die bei einfachem, robustem und preisgünstigem Aufbau eine hohe Empfindlichkeit aufweist. Dabei genügt im vorliegenden Zusammenhang eine mittlere Ortsauflösung der Abbildungsvorrichtung von typischerweise etwa 10 bis etwa 1000 Abbildungspunkten.

Diese Aufgabe wird erfindungsgemäß durch die Dunkelfeld-Abbildungsvorrichtung nach Anspruch 1 gelöst. Weitere Ausgestaltungen der Erfindung gehen aus den Unteransprüchen 2 bis 11 hervor. Die Erfindung stellt auch ein Verfahren zur Untersuchung einer Probe mit einer Mehrzahl von Teststellen mit einer derartigen Dunkelfeld-Abbildungsvorrichtung nach Anspruch 12 bereit. Bevorzugte Verfahrensmerkmale sind Gegenstand der Unteransprüche 13 bis 16.

Die erfindungsgemäße Dunkelfeld-Abbildungsvorrichtung zur ortsaufgelösten Dunkelfeldabbildung einer Probe, insbesondere einer fluoreszierenden Probe, umfasst eine Beleuchtungsanordnung zur Beleuchtung der Probe mit Anregungslicht, die ein Raster von getrennt ansteuerbaren Lichtquellen umfasst, wobei die Verbindungslinien von Lichtquellen und Probe einen Bereich mit dem Strahlengang des direkten Anregungslichts und einen Bereich mit dem Strahlengang des gerichtet reflektierten Anregungslichts definieren, und die Beleuchtungsanordnung so angeordnet und eingerichtet ist, dass die Licht-kegel der einzelnen Lichtquellen jeweils im Wesentlichen nicht-überlappende Bereiche der Probe beleuchten. Die Abbildungsvorrichtung umfasst weiter eine Detektionsanordnung zum Erfassen der als optische Antwort der Probe auf die Beleuchtung ausgesandten Strahlung mit strahlungsaufnehmenden Elementen, wobei die strahlungsaufnehmenden Elemente der Detektionsanordnung außerhalb des Bereichs mit dem Strahlengang des direkten Anregungslichts und des Bereichs mit dem Strahlengang des gerichtet reflektierten Anregungslichts angeordnet sind.

Die Erfindung beruht also auf dem Gedanken, bei einer ortsaufgelösten Abbildungsvorrichtung das Prinzip der Dunkelfeldbeleuchtung zur Kontraststeigerung zu verwenden und die Ortsauflösung nicht über den Detektionsteil der Vorrichtung, sondern über eine ortsaufgelöste Anregung der Probe zu erreichen. Dies erlaubt zum einen, auf teure Komponenten wie Anregungslaser oder gekühlte CCD-Elemente zu verzichten und ermöglicht zum anderen durch Verwendungen hochempfindlicher Einzeldetektoren eine hohe Nachweisempfindlichkeit.

In einer bevorzugten Ausgestaltung weist die Detektionsanordnung als strahlungsaufnehmende Elemente eine Mehrzahl von Lichtleitern auf, deren eines Ende jeweils die von der Probe ausgesandte Strahlung außerhalb des Bereichs mit dem Strahlengang des direkten Anregungslichts und dem Strahlengang des gerichtet reflektierten Anregungslichts aufnimmt, und deren anderes Ende mit einem gemeinsamen Einzeldetektor verbunden ist.

Dabei können auch mehrere Gruppen von Lichtleitern vorgesehen sein, die jeweils gemeinsam mit einem Einzeldetektor verbunden werden können. Da die Anzahl der Lichtleiter, die gemeinsam mit einem Einzeldetektor aufgrund der endlichen Größe der Lichtleiter beschränkt ist, kann es bei der Anordnung einer großen Zahl von Lichtleitern erforderlich sein, mehrere Einzeldetektoren vorzusehen, die beispielsweise jeweils verschiedene ringförmige Raumwinkelbereiche Δθ erfassen.

Die einen Enden der Mehrzahl von Lichtleitern sind dabei mit Vorteil bezogen auf eine gemeinsame Mittelachse radialsymmetrisch angeordnet. Dies erlaubt eine hohe Detektionsausbeute bei gleichzeitig hoher Detektionshomogenität über der Fläche der Probe.

Zweckmäßig ist der Einzeldetektor ein hochempfindlicher Detektor, insbesondere ein Photomultiplier.

Das Lichtquellen-Raster bildet in einer bevorzugten Ausgestaltung der Erfindung eine n x m Matrix, wobei n zwischen 2 und 100, und m zwischen 1 und 100 liegt. Für m=1 bilden ist das Lichtquellen-Raster eine Lichtquellen-Zeile der Länge n.

Der Abstand benachbarter Lichtquellen ist dabei zweckmäßig konstant. Variable Abstände und andere Rastergrößen liegen jedoch gleichfalls im Rahmen der Erfindung.

Die Lichtquellen sind mit Vorteil ausgewählt aus der Gruppe bestehend aus Leuchtdioden, Laserdioden, einem LCD-Anzeigenelement, einem TFT-LCD-Anzeigenelement, einem Feldemissions-Anzeigenelement, einem Elektrolumineszenz-Anzeigenelement, einem Plasmabildschirm, einem Polymer-Anzeigenelement, einem beleuchteten Flächenlichtmodulator (SLM), insbesondere einem mikromechanischen Spiegelarray (DMD), einer Vakuumfluoreszenzanzeige (VFD) und einem Videoprojektor.

Leuchtdioden sind als Lichtquellen besonders bevorzugt, da sie trotz guter Strahlqualität und ausreichender Leistung preiswert, einfach anzusteuern, und für eine Vielzahl von Wellenlängen erhältlich sind.

Das Lichtquellen-Raster kann auch Lichtquellen mit unterschiedlicher Emissionswellenlänge enthalten. Beispielsweise kann eine Lichtquelle jeweils mehrere Teststellen auf der Probe beleuchten, die mit unterschiedlichen Fluoreszenzfarbstoffen versehen sind. Eine eindeutige Zuordnung der optischen Antwort ist dann dennoch über die verschiedenen Emissionswellenlängen der Lichtquellen möglich.

In einer zweckmäßigen Ausgestaltung enthält die Beleuchtungsanordnung eine optische Abbildungsanordnung zur Abbildung des Lichtquellen-Rasters auf die zu beobachtende Probe, insbesondere eine abbildende Linse. Zur Abbildung sind jedoch auch alle anderen, an sich bekannten optischen Abbildungsanordnungen denkbar. Auch kann die Probe direkt beleuchtet werden, wenn etwa der Öffnungswinkel der Beleuchtung durch Apertur oder durch initiale Eigenschaften begrenzt ist.

Die Detektionsanordnung kann auf die Erfassung von optischer Antwortstrahlung derselben Wellenlänge wie die des Anregungslichts eingerichtet sein, etwa um in der Probe erzeugtes Streulicht zu erfassen. Bevorzugt ist allerdings, wenn die Detektionsanordnung auf die Erfassung einer von dem Spektrum des Anregungslichts verschiedenen optischen Antwortstrahlung eingerichtet ist, insbesondere auf Fluoreszenzemission der Probe.

Zwischen dem Lichtquellen-Raster und der Probe kann ein Element zur spektralen Eingrenzung des Anregungslichts angeordnet sein, insbesondere ein Filter, ein Gitter, einen akustooptischen Modulator oder ein Prisma. Ist die Anregungslichtquelle spektral hinreichend schmal, kann auf ein Element zur spektralen Eingrenzung auch verzichtet werden.

Ebenso kann die Detektionsanordnung ein Element zur spektralen Eingrenzung der optischen Antwortstrahlung enthalten, insbesondere ein Filter, ein Gitter, einen akustooptischen Modulator oder ein Prisma.

Darüber kann auch eine zeitliche Trennung von Anregung und Detektion zweckmäßig sein. Beispielsweise kann ein Chopperrad den Strahlengang zum Detektor erst öffnen, nachdem das Anregungslicht ausgeschaltet oder blockiert wurde. Notwendig ist dafür allerdings eine ausreichend lange Lebensdauer der angeregten Fluoreszenz.

Ein Verfahren zur Untersuchung einer Probe mit einer Mehrzahl von Teststellen mit einer derartigen Dunkelfeld-Abbildungsvorrichtung umfasst die Verfahrensschritte:
- Beleuchten von Teststellen durch selektive Ansteuerung von Lichtquellen des Lichtquellenrasters;
- Erfassen der als optische Antwort der Probe ausgesandten Strahlung; und
- Auswerten der erfassten Strahlung für die jeweils selektiv angesteuerten Lichtquellen.

Dabei können die Lichtquellen seriell angesteuert werden, wobei die Zuordnung der erfassten Strahlung zu einer beleuchteten Teststelle durch eine zeitliche Zuordnung der erfassten Strahlung zum Ansteuerungszeitpunkt der Lichtquellen erfolgt.

Alternativ oder zusätzlich kann zumindest ein Teil der Lichtquellen gleich oder verschieden moduliert angesteuert werden, und die Zuordnung der erfassten Strahlung zu einer moduliert beleuchteten Teststelle erfolgt durch eine Zuordnung einer Modulation der erfassten Strahlung zu der gewählten Ansteuerungsmodulation der Lichtquellen.

Daneben sind weitere Möglichkeiten zur Zuordnung der Detektionssignale zu den jeweiligen Teststellen denkbar, wie etwa eine Berücksichtigung des Winkels, der Position oder der Strahlungsintensität. Soweit eine solche andere Möglichkeit der Zuordnung besteht, kann auch eine überlappende Beleuchtung der Teststellen zugelassen werden, ohne die volle Zuordenbarkeit von Signal und Teststelle zu verlieren.

Bevorzugt ist jeder Teststelle der Probe zumindest eine Lichtquelle des Lichtquellen-Rasters zugeordnet, die sie bei der Ansteuerung der Lichtquelle ohne weitere Bewegung beleuchtet. Dann entfällt die aufwendige Ansteuerung bei Scaneinheiten herkömmlicher Photomulipliergeräte, bei denen entweder der Detektor, der Laserspot oder die gesamte abbildende Optik verschoben werden muss.

Es ist allerdings auch möglich, eine teilweise Bewegung des Lichtquellen-Rasters vorzusehen, also eine Kombination der selektiven Ansteuerung des Lichtquellen-Rasters mit einer Abtastbewegung, beispielsweise durch Abtasten einzelner Zeilen der Probe.

Das Verfahren ist besonders gut für die Untersuchung von Proben mit nicht zu vielen Teststellen geeignet, insbesondere für Proben mit 5 bis 2000 Teststellen, bevorzugt mit 50 bis 500 Teststellen, besonders bevorzugt von 100 bis 200 Teststellen.

Es versteht sich, dass weitere an sich bekannte Verfahren zur Rauschunterdrückung, beispielsweise eine mehrmalige Messung zur Verbesserung der Statistik im Rahmen der Erfindung zusätzlich zu den genannten Maßnahmen zur Anwendung kommen können.

Weitere vorteilhafte Ausgestaltungen, Merkmale und Details der Erfindung ergeben sich aus den abhängigen Ansprüchen, der Beschreibung des Ausführungsbeispiels und den Zeichnungen.

### Kurze Beschreibung der Zeichnungen

Nachfolgend soll die Erfindung anhand von Ausführungsbeispielen im Zusammenhang mit den Zeichnungen näher erläutert werden. Dabei sind nur die für das Verständnis der Erfindung wesentlichen Elemente dargestellt. Es zeigt
- Figur 1: eine schematische Darstellung einer Dunkelfeldabbildungsvorrichtung nach einem Ausführungsbeispiel der Erfindung;
- Figur 2: einen detailliertere Darstellung der Detektionsanordnung der Dunkelfeldabbildungsvorrichtung von Fig. 1.

### Wege zur Ausführung der Erfindung

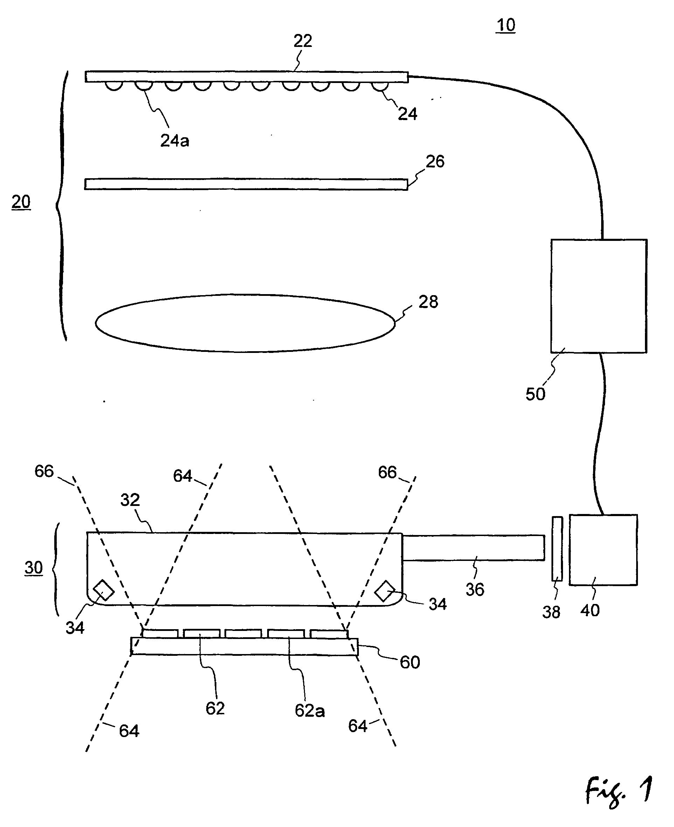

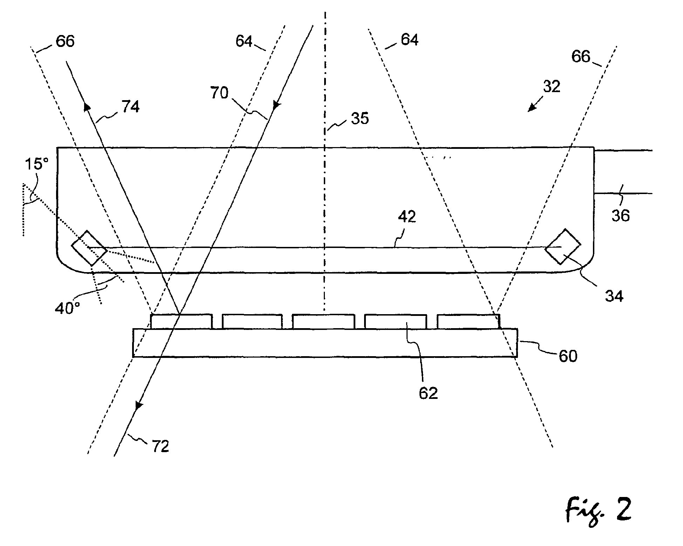

Mit Bezug auf die schematische Darstellung der Figuren 1 und 2 bezeichnet 10 in eine Dunkelfeldabbildungsvorrichtung nach einem Ausführungsbeispiel der Erfindung. Die Dunkelfeldabbildungsvorrichtung 10 weist eine Beleuchtungsanordnung 20 mit einer strukturierten Beleuchtung auf, nämlich mit einem Lichtquellen-Raster 22, welches 10 x 10 einzeln ansteuerbare Leuchtdioden 24 enthält. Die Leuchtdioden sind in dem LED-Raster 22 gleichmäßig mit einem Abstand von 1 mm in beiden Raumrichtungen angeordnet, und sind im Ausführungsbeispiel durch InGaAlP-LEDs mit einer Emissionswellenlänge von 645 nm gebildet.

Die zu untersuchende Probe 60 ist auf einem nicht dargestellten Probenhalter derart angeordnet, dass über die Linse 28 ein Bild des LED-Rasters 22 auf der Probenoberfläche abgebildet wird.

Zur spektralen Eingrenzung des Anregungslichts ist zwischen dem LED-Raster 22 und der Linse 28 ein Interferenzfilter 26 eingebracht, das Licht nur in einem engen Wellenlängenbereich um 645 nm durchlässt.

Die von der Probe 60 auf die Anregung ausgesandte optische Antwort, die im Ausführungsbeispiel, wie weiter unter im Detail beschrieben, im Wesentlichen durch Fluoreszenzstrahlung bei 680 nm gegeben ist, wird über eine Detektionsanordnung 30 aufgenommen. Die Detektionsanordnung 30 umfasst einen Ringdetektor 32, der weiter unten genauer beschrieben wird, einen Photomultiplier 40, und einen vor dem Photomultiplier 40 angeordneten zweiten Interferenzfilter 38, der Licht nur in einem engen Wellenlängenbereich um 680 nm durchlässt.

Der Photomultiplier 40 und das LED-Raster 22 sind mit einer Steuer- und Auswerteeinheit 50 verbunden, die das LED-Raster 22 ansteuert und die vom Photomultiplier 40 detektierte Lichtintensität erfasst und auf Grundlage der Ansteuerungsdaten auswertet.

Der Ringdetektor 32 enthält eine Vielzahl von Lichtleitern, deren Endstücke 34 radialsymmetrisch um eine Mittelachse 35 (Fig. 2) des Ringdetektors in einer Ebene 42 parallel zur Oberfläche der Probe 60 angeordnet und mit ihrer Öffnung auf die Probe 60 gerichtet sind. Wie in Fig. 2 dargestellt, zeigen die Endstücke 34 im Ausführungsbeispiel unter einem Winkel von 15° zur Senkrechten mit einem Öffnungswinkel von 40° auf die Probe. Die Lichtleiter sind gemeinsam in einem Schlauch 36 zum Photomultiplier 40 geführt.

Bezogen auf die Probe 60 ist der Ringdetektor 32 ist so bemessen und angeordnet, dass eine Dunkelfeldabbildung der Probe 60 erreicht wird.

Mit Bezug auf Fig. 2 wird durch den geometrischen Strahlungsgang der Lichtstrahlen des direkten Anregungslichts 70 und 72 ein Bereich 64 mit dem Strahlengang des direkten Anregungslichts definiert. Jegliche direkte Anregungsstrahlung ist innerhalb dieses, von dem LED-Raster 22 ausgehenden Strahlungskegelstumpfes 64 lokalisiert.

In gleicher Weise ist definiert der geometrische Strahlungsgang der gerichtet reflektierten (Einfallswinkel = Ausfallswinkel) Lichtstrahlen 74 des Anregungslichts einen Bereich 66 mit dem Strahlengang des gerichtet reflektierten Anregungslichts. Jegliche gerichtet reflektierte Anregungsstrahlung ist innerhalb dieses, von der Probe 60 ausgehenden Strahlungskegelstumpfes 66 lokalisiert.

Der Ringdetektor 32 ist nun so angeordnet, dass die Lichtleiterenden 34 sämtlich außerhalb der Bereiche 64, 66 liegen. Somit gelangt kein direktes oder gerichtet reflektiertes Anregungslicht in ein strahlungsaufnehmendes Element. Eine Fluoreszenzemission der Probe 60 wird dagegen ungerichtet in einen Raumwinkel von 4π abgestrahlt, und erreicht so auch die Lichtleiterenden 34 des Detektors.

Die ringförmige Anordnung der Lichtleiterenden 34 erlaubt eine hohe Detektionsausbeute bei gleichzeitig hoher Detektionshomogenität über der Fläche der Probe 60.

Um eine besonders homogene Erfassung der optischen Probenantwort zu erhalten, kann die vertikale Position 42 der Lichtleiterenden 34 des Ringdetektors wie folgt eingestellt werden: Zunächst wird anstelle des Photomultipliers 40 an den Schlauch 36 eine Lichtquelle angeschlossen, die etwa weißes Licht in die Lichtleiter einspeist. Die Lichtleiterenden 34 fungieren dann als Ringlichtquelle. Die Höhe des Ringdetektors 32 wird nun so eingestellt, dass die Oberfläche der Probe möglichst homogen ausgeleuchtet ist. Dies kann visuell, aber auch durch eine Messung am Probenort, beispielsweise mit einem CCD-Chip beurteilt werden. Dann wird die Lichtquelle am Schlauchende wieder durch den Photomultiplier 40 ausgetauscht. Die vertikale Position des Ringdetektors 32 ist nunmehr auch für eine homogene Detektion der Probenemission optimal eingestellt. Eine Kalibrierung der Messpunkte kann anschließend über die Messung des gestreuten Lichts einer Streufläche erfolgen.

Die Probe 60 ist im Ausführungsbeispiel ihrerseits strukturiert aufgebaut, und enthält ein Array von 10 x 10 Teststellen 62, von denen in der Darstellung der Fig. 1 nur einige schematisch gezeigt sind.

Die Probe 60 ist im Ausführungsbeispiel insbesondere ein Bio-Sensor-Chip aus einem zweidimensionalen Array von Teststellen 62, bei dem jede Teststelle spezifische Sondenmoleküle aufweist. Dabei sind die Sondenmoleküle auf einer Oberfläche fixiert und können mit chemischen Substanzen aus einer Untersuchungssubstanz spezifisch reagieren. Durch Anbindung von Fluorophoren, im Ausführungsbeispiel bei 645 nm anregbar und bei 680 nm emittierend, wird erreicht, dass das Stattfinden oder Nichtstattfinden einer Reaktion an einer Teststelle über das Auftreten oder Nichtauftreten einer Fluoreszenzemission am Ort der Teststelle nachgewiesen werden kann.

Im Ausführungsbeispiel sind das Beleuchtungssystem 20 und die Probe 60 derart aufeinander abgestimmt, dass jede Teststelle 62 von genau einer LED 24 beleuchtet werden kann. Wird nun beispielsweise zu einem bestimmten Zeitpunkt von der Steuer- und Auswerteeinheit 50 nur die LED 24a angesteuert, während die restlichen LEDs dunkel bleiben, wird nur die zugeordnete Teststelle 62a beleuchtet. In gleicher Weise können die anderen Teststellen selektiv beleuchtet werden.

Ist die Zuordnung von Teststellen 62 und LEDs 24 festgelegt, kann die Steuer- und Auswerteeinheit 50 dann das von der Detektionsanordnung 30 integral erfasste Fluoreszenzlicht der Teststelle 62a zuordnen. Durch sequentielle Ansteuerung aller LEDs 24 und sequentielle Erfassung des Fluoreszenzlichts kann somit die Probenantwort räumlich aufgelöst erfasst werden, ohne dass ein ortsauflösender Detektor erforderlich ist.

Die Zuordnung des Detektionssignals zu einer Teststelle 62 kann auch in anderer Weise also durch sequentielle Ansteuerung der LEDs 24 erfolgen. Beispielsweise kann eine erste LED mit einer ersten Frequenz, beispielsweise 40 Hz, moduliert angesteuert werden, und eine zweite LED mit einer zweiten Frequenz, beispielsweise 70 Hz. Die Antwortsignale der entsprechenden Teststellen sind dann ebenfalls mit 40 Hz bzw. 70 Hz moduliert, und lassen sich so in der Steuer- und Auswerteeinheit 50 trennen und zuordnen.

## Patentansprüche

1. Dunkelfeld-Abbildungsvorrichtung zur ortsaufgelösten Dunkelfeldabbildung einer Probe (60), insbesondere einer fluoreszierenden Probe, umfassend
- eine Beleuchtungsanordnung (20) zur Beleuchtung der Probe im Auflicht, wobei das Anregungslicht kegelförmig auf die Probe einfällt und von dieser gerichtet reflektiert wird, und so einen Bereich (64) mit dem Strahlengang des direkten Anregungslichts und einen Bereich (66) mit dem Strahlengang des gerichtet reflektierten Anregungslichts definiert,
wobei die Beleuchtungsanordnung (20) ein Raster (22) von getrennt ansteuerbaren Lichtquellen (24) umfasst, die so angeordnet und eingerichtet sind, dass die Lichtkegel der einzelnen Lichtquellen (24) jeweils im Wesentlichen nicht-überlappende Bereiche der Probe beleuchten, und
- eine Detektionsanordnung (30) mit einer Mehrzahl von Lichtleitern, deren eine Enden (34) die von der Probe ausgesandte Strahlung außerhalb des Bereichs (64) mit dem Strahlengang des direkten Anregungslichts und des Bereichs (66) mit dem Strahlengang des gerichtet reflektierten Anregungslichts aufnehmen, und deren andere Enden mit einem gemeinsamen Einzeldetektor (40) verbunden sind,
wobei die Lichtquellen (24) seriell ansteuerbar sind, zur ortsaufgelösten Anregung der Probe und zur zeitlichen Zuordnung der erfassten optischen Antwortstrahlung zum Ansteuerungszeitpunkt der Lichtquellen (24).

2. Dunkelfeld-Abbildungsvorrichtung nach Anspruch 1, bei der die einen Enden (34) der Mehrzahl von Lichtleitern bezogen auf eine gemeinsame Mittelachse (35) radialsymmetrisch angeordnet sind.

3. Dunkelfeld-Abbildungsvorrichtung nach Anspruch 1 oder 2, bei der der Einzeldetektor ein Photomultiplier (40) ist.

4. Dunkelfeld-Abbildungsvorrichtung nach einem der vorigen Ansprüche, bei der das Lichtquellen-Raster (22) eine n x m Matrix bildet, wobei n zwischen 2 und 100, und m zwischen 1 und 100 liegt, und bei dem der Abstand benachbarter Lichtquellen (24) bevorzugt gleichförmig ist.

5. Dunkelfeld-Abbildungsvorrichtung nach einem der vorigen Ansprüche, bei der die Lichtquellen (24) ausgewählt sind aus der Gruppe bestehend aus Leuchtdioden, Laserdioden, einem LCD-Anzeigenelement, einem TFT-LCD-Anzeigenelement, einem Feldemissions-Anzeigenelement, einem Elektrolumineszenz-Anzeigenelement, einem Plasmabildschirm, einem Polymer-Anzeigenelement, einem beleuchteten Flächenlichtmodulator (SLM), insbesondere einem mikromechanischen Spiegelarray (DMD), einer Vakuumfluoreszenzanzeige (VFD) und einem Videoprojektor.

6. Dunkelfeld-Abbildungsvorrichtung nach einem der vorigen Ansprüche, bei der das Lichtquellen-Raster (22) Lichtquellen (24) mit unterschiedlicher Emissionswellenlänge enthält.

7. Dunkelfeld-Abbildungsvorrichtung nach einem der vorigen Ansprüche, bei der die Beleuchtungsanordnung eine optische Abbildungsanordnung (28) zur Abbildung des Lichtquellen-Rasters (22) auf die zu beobachtende Probe (60), insbesondere eine abbildende Linse (28) enthält.

8. Dunkelfeld-Abbildungsvorrichtung nach einem der vorigen Ansprüche, bei der die Detektionsanordnung (30) auf die Erfassung einer von dem Spektrum des Anregungslichts verschiedenen optischen Antwortstrahlung eingerichtet ist.

9. Dunkelfeld-Abbildungsvorrichtung nach Anspruch 8, bei der die Beleuchtungsanordnung (20) ein zwischen Lichtquellen-Raster (22) und Probe (60) angeordnetes Element (26) zur spektralen Eingrenzung des Anregungslichts, insbesondere ein Filter, ein Gitter, einen akustooptischen Modulator oder ein Prisma enthält.

10. Dunkelfeld-Abbildungsvorrichtung nach Anspruch 8 oder 9, bei der die Detektionsanordnung (30) ein Element (38) zur spektralen Eingrenzung der optischen Antwortstrahlung, insbesondere ein Filter, ein Gitter, einen akustooptischen Modulator oder ein Prisma enthält.

11. Verfahren zur Untersuchung einer Probe mit einer Mehrzahl von Teststellen mit einer Dunkelfeld-Abbildungsvorrichtung nach einem der Ansprüche 1 bis 10, mit den Verfahrensschritten:
- Beleuchten von Teststellen durch selektive Ansteuerung von Lichtquellen des Lichtquellenrasters;
- Erfassen der als optische Antwort der Probe ausgesandten Strahlung; und
- Auswerten der erfassten Strahlung für die jeweils selektiv angesteuerten Lichtquellen.

12. Verfahren nach Anspruch 11, bei dem die Lichtquellen seriell angesteuert werden, und die Zuordnung der erfassten Strahlung zu einer beleuchteten Teststelle durch eine zeitliche Zuordnung der erfassten Strahlung zum Ansteuerungszeitpunkt der Lichtquellen erfolgt.

13. Verfahren nach Anspruch 11, bei dem zumindest ein Teil der Lichtquellen moduliert angesteuert wird, und die Zuordnung der erfassten Strahlung zu einer moduliert beleuchteten Teststelle durch eine Zuordnung einer Modulation der erfassten Strahlung zur Ansteuerungsmodulation der Lichtquellen erfolgt.

14. Verfahren nach einem der Ansprüche 11 bis 13, bei dem jeder Teststelle der Probe zumindest eine Lichtquelle des Lichtquellen-Rasters zugeordnet ist, die sie bei der Ansteuerung der Lichtquelle ohne weitere Bewegung beleuchtet.

15. Verfahren nach einem der Ansprüche 11 bis 14, zur Untersuchung einer Probe mit 5 bis 1000 Teststellen, bevorzugt mit 50 bis 500 Teststellen, besonders bevorzugt von 100 bis 200 Teststellen.

## Claims

1. A dark-field imaging device for the spatially resolved dark-field imaging of a sample (60), especially a fluorescent sample, comprising
- an illumination assembly (20) for the illumination of the sample with incident light,
wherein the excitation light conically impinges on the sample and is partially specular reflected thereby, thus defining a region (64) with the optical path of the direct excitation light, and a region (66) with the optical path of the directionally reflected excitation light,
wherein the illumination assembly (20) comprises a grid (22) of individually addressable light sources (24), which are arranged and adapted such that the light cones of the individual light sources (24) each illuminate substantially non-overlapping regions of the sample, and
- a detection assembly (30) having a plurality of light guides whose one ends (34) receive the radiation emitted by the sample outside the region (64) with the optical path of the direct excitation light and the region (66) with the optical path of the directionally reflected excitation light, and whose other ends are connected to a common single detector (40),
wherein the light sources (24) are serially addressable for the spatially resolved excitation of the sample and for the linking of the times at which the optical radiation was detected to the times the light sources (24) were addressed.

2. The dark-field imaging device according to claim 1, in which the one ends (34) of the plurality of optical conductors are disposed radially-symmetrically with respect to a common central axis (35).

3. The dark-field imaging device according to claim 1 or 2, in which the single detector is a photomultiplier (40).

4. The dark-field imaging device according to one of the preceding claims, in which the light-source grid (22) forms an n x m matrix, wherein n lies between 2 and 100, and m between 1 and 100, and in which the spacing between adjacent light sources (24) is preferably uniform.

5. The dark-field imaging device according to one of the preceding claims, in which the light sources (24) are selected from the group comprising light-emitting diodes, laser diodes, an LCD display element, a TFT LCD display element, a field emission display element, an electroluminescent display element, a plasma display, a polymer display element, an illuminated spatial light modulator (SLM), especially a micromechanical digital mirror device (DMD), a vacuum fluorescent display (VFD) and a video projector.

6. The dark-field imaging device according to one of the preceding claims, in which the light-source grid (22) includes light sources (24) having different emission wavelengths.

7. The dark-field imaging device according to one of the preceding claims, in which the illumination assembly includes an optical imaging assembly (28) for imaging the light-source grid (22) onto the sample (60) of interest, especially an imaging lens (28).

8. The dark-field imaging device according to one of the preceding claims, in which the detection assembly (30) is arranged for the detection of an optical response radiation that differs from the spectrum of the excitation light.

9. The dark-field imaging device according to claim 8, in which the illumination assembly (20) includes, disposed between the light-source grid (22) and the sample (60), an element (26) for limiting the spectral width of the excitation light, especially a filter, a grating, an acustooptic modulator or a prism.

10. The dark-field imaging device according to claim 8 or 9, in which the detection assembly (30) includes an element (38) for limiting the spectral width of the optical response radiation, especially a filter, a grating, an acustooptic modulator or a prism.

11. A method for the analysis of a sample having a plurality of test sites with a dark-field imaging device according to one of claims 1 through 10, having the steps:
- illuminating test sites by selectively addressing light sources of the light-source grid;
- detecting the radiation emitted by the sample as an optical response; and
- evaluating the detected radiation for the relevant selectively addressed light sources.

12. The method according to claim 11, in which the light sources are addressed serially, and the detected radiation is linked to the illuminated test sites by linking the times at which the radiation was detected to the times at which the light sources were addressed.

13. The method according to claim 11, in which at least a portion of the light sources is addressed in a modulated manner, and the detected radiation is linked to the illuminated test sites by linking the modulation of the detected radiation to the addressing modulation of the light sources.

14. The method according to one of claims 11 through 13, in which to every test site of the sample is linked to at least one light source of the light-source grid, which illuminates it with no further movement when the light source is addressed.

15. The method according to one of claims 11 through 14, for the analysis of a sample having 5 to 1000 test sites, preferably having 50 to 500 test sites, and particularly preferably from 100 to 200 test sites.

## Revendications

1. Dispositif d'imagerie à fond noir pour la projection sur fond noir de l'image d'un spécimen, en particulier d'un spécimen fluorescent, avec résolution spatiale, comprenant
- un dispositif d'éclairage (20) pour éclairer le spécimen en lumière incidente, la lumière excitatrice tombant en cône sur le spécimen et étant réfléchie directionnellement par ce dernier et définissant ainsi une région (64) contenant le faisceau de la lumière d'excitation directe et une région (66) contenant le faisceau de la lumière d'excitation réfléchie directionnellement,
le dispositif d'éclairage (20) comprenant un ensemble (22) de sources lumineuses (24) commandées séparément, qui sont disposées et orientées de telle manière que les cônes de lumière des différentes sources lumineuses (24) éclairent des régions du spécimen qui ne se chevauchent sensiblement pas, et
- un dispositif de détection (30) possédant une pluralité de guides de lumière dont les premières extrémités (34) reçoivent le rayonnement émis par le spécimen en dehors de la région (64) contenant le faisceau de la lumière excitatrice directe ainsi qu'en dehors de la région (66) contenant le faisceau de la lumière excitatrice réfléchie directionnellement, et dont les autres extrémités sont reliées à un détecteur élémentaire commun (40),
les sources lumineuses (24) pouvant être activées en série pour exciter le spécimen avec résolution spatiale et pour associer dans le temps le rayonnement de réponse optique détecté à l'instant d'activation des sources lumineuses (24).

2. Dispositif d'imagerie à fond noir selon la revendication 1, dans lequel les premières extrémités (34) de la pluralité de guides de lumière sont disposées avec une symétrie radiale par rapport à un axe médian commun (35).

3. Dispositif d'imagerie à fond noir selon la revendication 1 ou 2, dans lequel le détecteur élémentaire est un photo-multiplicateur (40).

4. Dispositif d'imagerie à fond noir selon l'une des revendications précédentes dans lequel l'ensemble de sources lumineuses (22) forme une matrice n x m, dans laquelle n est compris entre 2 et 100 et m entre 1 et 100 et dans laquelle l'écartement des sources lumineuses (24) adjacentes est de préférence uniforme.

5. Dispositif d'imagerie à fond noir selon l'une des revendications précédentes, dans lequel les sources lumineuses (24) sont choisies dans le groupe composé des diodes électroluminescentes, des diodes laser, d'un élément d'affichage LCD, d'un élément d'affichage TFT-LCD, d'un élément d'affichage à émission par effet de champ, d'un élément d'affichage à électroluminescence, d'un écran à plasma, d'un élément d'affichage polymère, d'un modulateur de lumière de surface éclairé (SLM), en particulier, d'un groupement de miroirs micromécaniques (DMD), d'un affichage fluorescent à vide (VFD) et d'un projecteur vidéo.

6. Dispositif d'imagerie à fond noir selon l'une des revendications précédentes, dans lequel l'ensemble de sources lumineuses (22) comprend des sources lumineuse (24) possédant différentes longueurs d'onde d'émission.

7. Dispositif d'imagerie à fond noir selon l'une des revendications précédentes, dans lequel le dispositif d'éclairage comprend un dispositif de projection optique (28) destiné à projeter l'image de l'ensemble de sources lumineuses (22) sur le spécimen à observer (60), en particulier une lentille de projection (28).

8. Dispositif d'imagerie à fond noir selon l'une des revendications précédentes, dans lequel le dispositif de détection (30) est conçu pour détecter un rayonnement de réponse optique qui diffère du spectre de la lumière excitatrice.

9. Dispositif d'imagerie à fond noir selon la revendication 8, dans lequel le dispositif d'éclairage (20) comprend un élément (26) disposé entre l'ensemble de sources lumineuses (22) et le spécimen (60) et destiné à la limitation spectrale de la lumière excitatrice, en particulier un filtre, un réseau, un modulateur acoustico-optique ou un prisme.

10. Dispositif d'imagerie à fond noir selon l'une des revendications précédentes, dans lequel le dispositif de détection (30) comprend un élément (38) destiné à la limitation spectrale du rayonnement de réponse optique, en particulier un filtre, un réseau, un modulateur acoustico-optique ou un prisme.

11. Procédé pour examiner un spécimen qui présente une pluralité de zones de test au moyen d'un dispositif d'imagerie à fond noir selon une des revendications à 1 à 10, qui comprend les étapes de procédé suivantes :
- éclairer les zones de test en activant sélectivement les sources lumineuses de l'ensemble de sources lumineuses ;
- détecter le rayonnement émis constituant la réponse optique du spécimen ; et
- analyser le rayonnement détecté correspondant aux sources lumineuses activées sélectivement.

12. Procédé selon la revendication 11, dans lequel les sources lumineuses sont activées en série et l'association du rayonnement détecté à une zone de test éclairée s'effectue en établissant la correspondance dans le temps entre le rayonnement détecté et l'instant d'activation des sources lumineuses.

13. Procédé selon la revendication 11, dans lequel au moins une partie des sources lumineuses est activée de façon modulée, et l'association du rayonnement détecté à une zone de test éclairée de façon modulée s'effectue en établissant la correspondance entre une modulation du rayonnement détecté et la modulation de l'activation des sources lumineuse.

14. Procédé selon l'une des revendications 11 à 13, dans lequel chaque zone de test du spécimen est associée à au moins une source lumineuse de l'ensemble de sources lumineuses qui l'éclaire lors de l'activation de la source lumineuse sans autre déplacement.

15. Procédé selon l'une des revendications 11 à 14, pour l'examen d'un spécimen possédant 5 à 1000 zones de test, de préférence 50 à 500 zones de test, avec une préférence particulière pour 100 à 200 zones de test.
